# EUROPÄISCHE PATENTSCHRIFT

(11) **EP 2 696 116 B1**
(45) Veröffentlichungstag und Bekanntmachung des Hinweises auf die Patenterteilung: **03.12.2014**
(21) Anmeldenummer: 12179702.1
(22) Anmeldetag: 08.08.2012
(51) Int. Cl.: F16K 17/26, F16K 17/34

(54) **Bidirektionales Sicherheitsventil**
Bidirectional safety valve
Soupape de sécurité bidirectionnelle

(43) Veröffentlichungstag der Anmeldung: 12.02.2014
(73) Patentinhaber: Enrichment Technology Company Ltd., 52409 Jülich (DE)
(72) Erfinder: Castenholz, Claus, 53879 Euskirchen (DE)
(74) Vertreter: Jostarndt, Hans-Dieter

(56) Entgegenhaltungen:
- GB-A- 333 365
- JP-A- 2002 181 215
- US-A- 398 111
- US-A- 4 944 327
- US-A1- 2005 098 662
- US-A1- 2006 000 511

## Beschreibung

### Gebiet der Erfindung

Die Erfindung bezieht sich auf Sicherheitsventile, die bei bidirektionalem Transport von Medien in einem Rohrsystem in beide Transportrichtungen abdichten können und auf ein Verfahren zum Betreiben eines solchen Sicherheitsventils in einem Rohrsystem.

### Hintergrund der Erfindung

Ein Ventil in Rohrleitungen ist ein Bauteil zur Absperrung oder Regelung des Durchflusses von Medien (Gasen oder Flüssigkeiten). In Ventilen wird ein Verschlussteil (z. B. ein Kegel oder eine Kugel) nahezu parallel zur Strömungsrichtung des Mediums bewegt. Strömungen werden unterbrochen, indem dieses Verschlussteil vollständig (über einen gesamten Umfang) auf einer passend geformten Öffnung angepresst wird. Ventile können so gefertigt werden, dass diese im Gegensatz zu anderen Bauteilen zum Absperren von Stoffströmen (z. B. Absperrschieber, Absperrklappe, Kugelhahn) über den gesamten Stellbereich ein im Strömungsquerschnitt gleichmäßiges Strömungsbild besitzen, siehe dazu beispielsweise DE 20104878 U1. Deshalb eignen sich Ventile neben dem reinen Absperren von Stoffströmen auch gut für Regelaufgaben. Solche Ventile verschließen aber nicht selbsttätig aufgrund einer Druckerhöhung im Rohrsystem. Sicherheitsventile schützen dagegen druckbeaufschlagte Räume oder Druckbehälter (z. B. Dampfkessel, Druckbehälter, Rohrleitungen, Transportbehälter) vor einem unzulässigen Druckanstieg durch Ablassen des Drucks, der sonst zu einer Schädigung des angeschlossenen Rohrsystems führen kann. Diese Art der Sicherheitsventile sperrt allerdings nicht ein Teil des Rohrsystems gegen einen anderen Teil des Rohrsystems im Bedarfsfall ab.

Als Sicherheitsventile können auch Rückschlagventile eingesetzt werden, um eine ungewollte Umkehr der Strömungsrichtung in einem Rohrsystem zu unterbinden. Ein solches Rückschlagkugelventil ist beispielsweise in DE 6810915 U beschrieben. Das Rückschlagkugelventil besteht dazu aus einer Verengung, die durch eine Kugel verschlossen wird. Die Kugel wird von einer Feder auf die Verengung gedrückt und verschließt den Durchgang. Das Medium kann nicht hindurchströmen. Derartige Ventile sind in der gesperrten Richtung in der Regel hermetisch dicht. Wenn das Medium dagegen von oben entgegen der Feder auf die Kugel drückt und die Kraft des Mediums auf die Kugel die Kraft der Feder überwiegt, kann das Medium durch das Ventil hindurchströmen. Diese Rückschlagventile können allerdings nur in eine durch die Konstruktion und die Einbaurichtung des Rückschlagventils in das Rohrsystem vorgegeben Richtung das Rohrsystem absperren.

US 2006/0000511 A1 offenbart ein Sicherheitsventil mit einer Kugel als beweglichen Dichtkörper in einem vertikal ausgerichteten Ventilvolumen. Das Ventilvolumen besitzt zwei Öffnungen (Einlass unten und Auslass oben), die sich jeweils so verjüngen, dass der Ball als Dichtkörper bei einem erhöhten Druck gegen eine der Öffnungen (je nach Richtung des Drucks) gepresst wird, so dass der Ball die Ventilöffnung abdichtet. Hier schwebt der Ball aufgrund einer normalen Strömungsgeschwindigkeit in der Flüssigkeit, die durch das Ventil strömt. Beim Schweben heben sich die Gravitationskraft des Balls und der Druck auf den Ball aufgrund der Soll-Strömungsgeschwindigkeit auf. Bei einer Strömungsgeschwindigkeit größer der Sollgeschwindigkeit dichtet der Ball nach oben ab, im umgekehrten Fall nach unten.

US 398,111 und JP 2002/181215 A offenbaren automatische Ventile mit einer beidseitigen Kugeldichtung, wobei zur Abdichtung des Ventils eine Kugel in einem Hohlraum im Ventil angeordnet ist. In Durchströmungsposition des Ventils ist die Kugel auf Führungsschienen im Hohlraum gelagert, so dass die Flüssigkeit durch das Ventil hindurch auch unter der Kugel entlangströmen kann. Die Führungsschienen sind so gebogen, dass der unterste Punkt der Führungsschienen den Ruhepunkt der Kugel infolge der Gravitation darstellt. Infolge eines erhöhten Flüssigkeitsdrucks wird die Kugel in Richtung der Dichtpositionen geschoben, wobei bei einem Druck oberhalb eines Schwellwerts die Kugel in die Dichtpositionen gedrückt wird. Sobald der Flüssigkeitsdruck nachlässt, rollt die Kugel wieder eigenständig zurück in die Ruheposition.

US 2005/0098662 A1 offenbart ein einseitig abdichtendes Ventil für Sprinklerköpfe in Sprinkleranlagen. Hier liegt ein deformierbarer Ball auf einer Stoppeinrichtung auf, deren durchlässiger Querschnitt kleiner als der Balldurchmesser verhindert, dass der Ball in die Abdichtposition gelangt. Innerhalb des Volumens oberhalb der Stoppeinrichtung kann sich der Ball beliebig bewegen. Das Ventil ist für eine einseitige Abdichtung der Zuleitung zu einem Sprinkler-Kopf vorgesehen. Ist der Druck in der Wasserleitung aufgrund eines defekten Sprinklers zu groß, wird der deformierbare Ball durch die Stoppvorrichtung hindurchgepresst, so dass er in die Abdichtposition zur Abdichtung des Sprinklerkopfes gelangen kann.

US 4,944,327 offenbart ein einseitig abdichtendes Ventil für Sprinklerköpfe in Sprinkleranlagen, wobei der abdichtende Ball mittels Gravitationskraft in der nicht abdichtenden Position gehalten wird. Der Sprinklerkopf muss daher vertikal und das Ventil horizontal angeordnet werden. Sobald der Wasserdruck größer als die Gravitationskraft auf den Ball ist, wird dieser in seine Abdichtposition gedrückt. Das Ventil dichtet nur einseitig ab.

In Rohrsystemen, in denen sich die Strömungsrichtung des Mediums beliebig ändern kann und in denen ein abzusperrender Druckstoß aus beliebiger Richtung erfolgen kann, stellen diese Rückschlagventile keinen ausreichenden Schutz dar. Es ist daher wünschenswert, ein Rückschlagventil bereitzustellen, das unabhängig von der Einbaurichtung für beliebige Strömungsrichtungen den Durchfluss eines Mediums durch ein Rohrsystem im Bedarfsfall zuverlässig unterbrechen kann.

### Zusammenfassung der Erfindung

Es ist eine Aufgabe der vorliegenden Erfindung, ein Sicherheitsventil bereitzustellen, das unabhängig von der Einbaurichtung des Sicherheitsventils in einem Rohrsystem selbstständig und zuverlässig in der Lage ist, den Durchfluss eines Mediums durch das Sicherheitsventil für beliebige Strömungsrichtungen des Mediums in einem Bedarfsfall zu unterbrechen.
Diese Aufgabe wird gelöst durch ein Sicherheitsventil mit den Merkmalen des Anspruchs 1. Dadurch wird ein Sicherheitsventil bereitgestellt, das selbstständig und zuverlässig in der Lage ist, den Durchfluss eines Mediums durch das Sicherheitsventil in einem Bedarfsfall zu unterbrechen. Ein solcher Bedarfsfall liegt beispielsweise vor, wenn die Strömungsgeschwindigkeit des Mediums in dem Rohrsystem und damit auch im Sicherheitsventil, das an das Rohrsystem angeschlossen ist, über einen Schwellenwert steigt. Der Schwellenwert entspricht dabei einem bestimmten Wert, oberhalb dessen alle Strömungsgeschwindigkeiten aus prozesstechnischen Gründen als zu hoch angesehen werden und daher aus Sicherheitsgründen der Durchfluss des Mediums durch das Rohrsystem unterbrechen werden soll. Die Haltekraft der Halterung auf den Dichtkörper ist so angepasst, dass der Dichtkörper automatisch durch den über die Strömungsgeschwindigkeit auf den Dichtkörper wirkenden Druck des strömenden Mediums aus der Halterung gelöst (entfernt) wird und sich wie ein Pfropfen vor die Öffnung im Sicherheitsventil legt. Dadurch geschieht die Abdichtung unabhängig von äußeren Bedienschritten als automatische Reaktion auf einen an den Dichtkörper anliegenden Druck aufgrund der Strömungsgeschwindigkeiten im Sicherheitsventil. Das Entfernen aus der Halterung kann dabei in jede mögliche Strömungsrichtung erfolgen. Bei einer Strömungsrichtung in die eine Richtung erfolgt die Entfernung des Dichtkörpers in eben diese Richtung. Bei einer entgegengesetzten Strömungsrichtung erfolgt das Entfernen des Dichtkörpers aus derselben Halterung desselben Sicherheitsventils in eben diese entgegengesetzte Richtung. Die Halterung kann dabei jede dafür geeignete Form besitzen. Durch dieses Prinzip ist die automatische Abdichtung durch den Dichtkörper unabhängig von der Einbaurichtung des Sicherheitsventils in einem Rohrsystem gewährleistet. Die verjüngenden Abschnitte sind vor den jeweiligen Öffnungen angeordnet, so dass der entfernte Dichtkörper durch das strömende Medium immer in Richtung einer solchen Verjüngung zur darauf folgenden Abdichtung getrieben wird. Insofern ist das Sicherheitsventil für beliebige Strömungsrichtungen des Mediums durch den Hohlraum des Sicherheitsventils hindurch verwendbar. Insbesondere kann dasselbe Sicherheitsventil für sich ändernde Strömungsrichtungen im Rohrsystem gleichermaßen verwendet werden, ohne dass dafür das Sicherheitsventil modifiziert oder ausgebaut und andersherum wieder eingebaut werden müsste. Der auf die Form der Verjüngung geeignet angepasste Dichtkörper sorgt im Bedarfsfall für eine einfache, sichere und zuverlässige Abdichtung einer der Öffnungen des Sicherheitsventils und schützt dadurch das dahinterliegende Rohrsystem bespielsweise gegenüber einer zu hohen Belastung durch zu schnell und mit zu starkem Druck strömende Medien oder gegenüber den Folgen einer starken Druckerhöhung an einem Ort des Rohrsystems, beispielsweise gegenüber einer Verunreinigungen durch Explosionsrückstände, die mit dem Medium transportiert werden. Hier führt die Explosion im Rohrsystem zu einem Druckstoß, der die Strömungsgeschwindigkeit des Mediums kurzzeitig stark ansteigen lässt und damit die Abdichtung durch das Sicherheitsventil auslöst. Somit ist das dahinterliegende Rohrsystem verschlossen und eventuelle Verunreingungen können den abgedichteten Teil des Rohrsystems nicht mehr erreichen. Vorzugsweise ist der Dichtkörper dabei eine Kugel, damit die relative Orientierung des Dichtkörpers im Hohlraum keinen Einfluss mehr auf die Dichteigenschaften des Dichtkörpers im sich verjüngenden Abschnitt hat. Die geeigneten Abmessungen des Dichtkörpers beziehen sich in diesem Fall auf geeignete Kugeldurchmesser der Kugel als Dichtkörper.

Der Begriff "Sicherheitsventil" bezeichnet dabei alle geeigneten Einrichtungen, die ein Verschließen eines Rohrsystems in eine der Richtungen bei Bedarf (im Sicherheitsfall) bewerkstelligen und ansonsten für die jeweiligen Medien passierbar sind. Das Rohrsystem, in dem das oder die Sicherheitsventile montiert (eingebaut) sind, können je nach Anwendung verschieden ausgeführt sein. Allen Rohrsystemen gemein ist dabei, dass in ihnen Medien von einem ersten Ort zu einem zweiten Ort transportiert werden und dass das Sicherheitsventil an einer beliebigen Position in dieser Transportstrecke zwischen erstem und zweitem Ort angeordnet sein kann. Im Rohrsystem kann der Transport der Medien in eine bestimmte Richtung oder bidirektional in beliebige Richtungen erfolgen. Dieser bidirektionale Transport kann beispielsweise auch wechselseitig mal in die eine Richtung und mal in die andere Richtung erfolgen. Die Transportrichtung entspricht somit der Strömungsrichtung. Hierbei ist das Rohrsystem für eine bestimmte Menge an transportierten Medien pro Zeiteinheit ausgelegt, beispielsweise über Rohrquerschnitt und Strömungsgeschwindigkeit im Rohrsystem. Die Sollwerte für die Strömungsgeschwindigkeit entsprechende dabei den Normalbedingungen. Die Betriebswerte können im Betrieb um die Normalbedingungen herum in einem zulässigen Wertebereich schwanken. Was als zulässiger Wertebereich anzusehen ist, hängt von der jeweiligen Anwendung des Rohrssystems und der Art der transportierten Medien ab. Der Schwellenwert bezeichnet dabei einen Wert, der bezüglich der Strömungsgeschwindigkeiten des Medium als kritische Obergrenze gesehen wird. Um zu verhindern, dass Medien mit Strömungsgeschwindigkeiten oberhalb des Schwellenwertes das Rohrsystem durchströmen können, ist die Halterung des Dichtkörpers im Sicherheitsventil so angepasst, dass bei Strömungsgeschwindigkeiten oberhalb des Schwellenwertes der Dichtkörper aus der Halterung entfernt wird und seine dichtende Wirkung im sich verjüngenden Abschnitt des Hohlraums im Sicherheitsventil ausübt. Als Medium werden alle flüssigen oder gasförmigen Stoffe bezeichnet, die durch das Rohrsystem hindurch transportiert werden (hindurchströmen). Medien können beispielsweise Luft oder andere Versorgungs- oder Prozessgase oder Wasser oder andere Versorgungs- oder Prozessflüssigkeiten sein. Bei Flüssigkeiten muss deren Viskosität hinreichend viskos sein, damit das flüssige Mediun mit einer entsprechenden Geschwindigkeit durch das Sicherheitsventil hindurch und um die Halterung herum strömen kann.

Der Begriff "Hohlraum" bezeichnet hierbei das Volumen zwischen einer ersten und einer zweiter Öffnung (und gegebenenfalls zusätzlichen Öffnungen in Sicherheitsventilen mit mehr als zwei Öffnungen), durch das das Medium von einer der Öffnung(en) des Sicherheitsventils als Einlassöffnung zur anderen der Öffnungen als Auslassöffnung(en) hindurchströmt. Der Hohlraum kann dabei beliebige geeignete Formen besitzen. Hierbei besitzt der Hohlraum im Bereich um die Halterung mit Dichtkörper größere Ausmaße, beispielsweise einen größeren Querschnitt in Richtung der Öffnungen gesehen als in der Nähe der Öffnungen (Öffnungsquerschnitt oder Öffnungsfläche) selber. Dieser größere Querschnitt (bzw. größere Querschnittsfläche) ist notwendig, damit das in die Einlassöffnung hineinströmemde Medium ohne merkliche Strömungswiderstände um die Halterung herum und durch die Auslassöffnung(en) wieder hinausströmen kann. Vorzugsweise ist die Querschnittsfläche des Hohlraums um den Dichtkörper herum gleich der Querschnittfläche der Öffnungen. Beispielsweise hätte diese Querschnittsfläche bei einer Kugel als Dichtkörper und runden Öffnungen um den Dichtkörper herum eine ringähnliche Form, dessen Fläche der Öffnungsfläche entspricht. Der Fachmann kann im Rahmen der vorliegenden Erfindung auch andere geeignete Formen / Volumina des Hohlraums wählen, sofern das unter Normalbedingungen hindurchströmende Medium das Sicherheitsventil unabhängig von der Strömungsrichtung ungehindert passieren kann. Entsprechend der Form des Hohlraums kann der Dichtkörper im Rahmen der vorliegenden Erfindung unterschiedliche Formen und Größen besitzen. Die Form und Größe des Dichtkörpers muss dabei aber so auf die Form und Größe der sich verjüngenden Abschnitte des Hohlraums angepasst sein, dass der Dichtkörper nach Entfernen aus der Halterung die Öffnung abdichten kann. Die Abschnitte des Hohlraums werden als "sich verjüngend" bezeichnet, in denen die Querschnittsfläche zu den Öffnungen hin gesehen zumindest in einem Bereich des Abschnitts verkleinert. Beispielsweise kann sich der Querschnitt in dem verjüngenden Abschnitt zunächst verkleinern, danach aber wieder aufweiten. In einer anderen Ausführungsform kann sich der Querschnitt auch kontinuierlich zu den Öffnungen hin verkleinern. Hierbei wird der Dichtkörper in den sich verjüngenden Abschnitt des Hohlraums durch das stömende Medium hineingepresst, so dass der Dichtkörper den Querschnitt des sich verjüngenden Abschnitts zumindest an einer Stelle vollständig abdeckt und damit die Dichtwirkung erzielt wird. Beispielsweise eignen sich für konisch zulaufende (verjüngende) Abschnitte entsprechend konisch geformte Dichtkörper. Für andersartig sich verjüngende Abschnitte sind eventuell andere Formen des Dichtkörpers geeignet. Wenn die verjüngenden Abschnitte in der Nähe der Ruheposition des konischen Dichtkörpers angeordnet sind, ist eine günstige Orientierung des konischen Dichtkörpers in den sich verjüngenden Abschnitten gewährleistet. Als Nähe wird eine Entfernung kleiner als die Länge des konischen Dichtkörpers bezeichnet, vorteilhaft ist eine Entfernung gleich der Hälfte der Länge des konischen Dichtkörpers. Bei Dichtkörpern in Kugelform ist die Orientierung der Kugel relativ zur den sich verjüngenden Abschnitten unerheblich für das Erzielen einer Dichtwirkung. Die Dichtkörper können dabei aus jedem geeigneten Material, beispielsweise Metall oder Kunststoff, gefertigt sein.

Als Ruheposition wird die Position des Dichtkörpers in der Halterung bezeichnet, während die Dichtposition die Position des Dichtkörpers bezeichnet, in der eine Öffnung durch den Dichtkörper zuverlässig abgedichtet wird. Entfernungsangaben der Ruheposition oder der Dichtposition zu anderen Teilen des Sicherheitventils beziehen sich dabei auf den geometrischen Schwerpunkt des Dichtkörpers.

Die Haltekraft bezeichnet die Summe aller Kräfte, die durch die Halterung auf den Dichtkörper ausgeübt werden, um den Dichtkörper in der Ruheposition festzuhalten. Die Kraft, die das strömende Medium über den Strömungsdruck auf den Dichtkörper ausüben muss, um ihn aus der Halterung zu entfernen, muss daher die Haltekraft übersteigen. Für unterschiedliche Strömungsdrücke und unterschiedliche Schwellenwerte müssen die Haltekräfte der Halterungen entsprechend der jeweiligen Anwendung angepasst werden. Das kann durch Einbau unterschiedlicher Halterungen oder durch Verwendung anderer Dichtkörper passieren.

In einer Ausführungsform ist der sich verjüngende Abschnitt konisch mit einem größten und einem kleinsten Durchmesser geformt, wobei der kleinste Durchmesser des konischen Abschnitts kleiner als eine erste Abmessung des Dichtkörpers ist und der größte Durchmesser größer als eine zweite Abmesssung des Dichtkörpers ist, der zumindest in einem Bereich einen kreisförmigen Querschnitt besitzt. Dadurch wird sichergestellt, dass der Dichtkörper zumindest in einer Position in dem konischen Abschnitt die Querschnittsfläche des konischen Abschnitts zumindest an dieser Position vollständig ausfüllt und insofern eine sichere Abdichtung der Öffnung erfolgt.

In einer weiteren Ausführungsform ist die Dichtposition einer Kugel als Dichtkörper weniger als zwei Kugeldurchmesser, vorzugsweise weniger als 1,5 Kugeldurchmesser, noch mehr bevorzugt weniger als 1,0 Kugeldurchmesser, von der Ruheposition der Kugel entfernt. Dadurch wird sichergestellt, dass die Kugel nach dem Entfernen sicher in den sich verjüngenden Bereich gelangt und in kurzer Zeit nach der Entfernung die jeweilige Öffnung zuverlässig abdichtet. Eine geringe Distanz zwischen Dichtposition und Ruheposition ermöglicht ein einfacheres Zurückholen des Dichtkörpers in die Ruheposition. Dies gilt auch für alle anderen Dichtkörpernformen.

In einer Ausführungsform umfasst der Dichtkörper metallisches Material oder keramisches Material. Die Verwendung von metallischem Material, beispielsweise Stahl oder Aluminium, für den Dichtkörper vermeidet eventuelle Verformungen des Dichtkörpers durch das strömende Medium im Betrieb des Rohrsystems, so dass eine für eine bestimmte geometrische Form des Hohlraums und des verjüngenden Bereichs voraussehbare und konstante Abdicht- und Umströmungseigenschaften des Dichtkörpers vorliegen. Bei einem Dichtkörper aus keramischem Material hat man den Vorteil der Korrosionsbeständigkeit des Dichtkörpers im Falle korrodierender oder agressiver Medien im Rohrsystem. Außerdem sind die Dichtkörper nach einer Abdichtung gut wiederverwendbar, da sich ihre Form auch durch das Hineinpressen in die Dichtposition nicht verändert. Durch die Formstabilität lassen sich solche Dichtkörper auch leicht wieder aus der Dichtposition entfernen, wenn eine Abdichtung nicht mehr benötigt wird. In einer bevorzugten Ausführungsform ist der ansonsten metallische Dichtkörper von einem elastischen Material umhüllt. So kann eine zuverlässige Dichtwirkung auch bei vorhandenen kleinen Partikeln auf der Oberfläche des Dichtkörpers oder im sich verjüngenden Bereich erzielt werden. Vorzugsweise ist die Umhüllung dünn, beispielsweise 1 - 2 mm dick. Durch die Elastizität der umgebenden Hülle wird ein vollständiger Kontakt der Oberfläche des Dichtkörpers zur Oberfläche des sich verjüngenden Bereichs zumindest an einer umlaufenden Position im sich verjüngenden Bereich erreicht und weiterhin eine gute Entfernbarkeit des Dichtkörpers aus der Dichtposition gewährleistet.

In einer Ausführungsform wird der Dichtkörper reversibel in der Halterung in der Ruheposition gehaltert. Für eine Wiederverwendung des Sicherheitsventils nach einer erfolgten Abdichtung durch den aus der Halterung entfernten Dichtkörper ist eine reversible Halterung für den Dichtkörper erforderlich. Ein entfernter Dichtkörper kann in eine reversible Halterung wieder eingesetzt werden, so dass das Sicherheitsventil danach wieder voll funktionstüchtig ist. Dieses Einsetzen kann beispielsweise manuell nach Ausbau des Sicherheitsventils aus dem Rohrsystem erfolgen oder erfolgt im weiter eingebauten Zustand mit geeigneten mechanischen Mittel.

Gemäss der Erfindung ist die Halterung eine mechanische Fixierungsvorrichtung. Eine Fixierungsvorrichtung ist beispielsweise eine Klemmvorrichtung oder eine Federvorrichtung. Solche Fixierungsvorrichtungen ermöglichen eine reversible Halterung des Dichtkörpers, so dass die Fixierungsvorrichtung nach Entfernen des Dichtkörpers wieder erneut mit dem Dichtkörper zur erneuten Verwendung des Sicherheitsvertils bestückt werden kann. In einer bevorzugten Ausführungsform ist diese Fixierungsvorrichtung eine Klemmvorrichtung. In einer bevorzugten Ausführungsform der Klemmvorrichtung umfasst die Klemmvorrichtung zwischen einem zumindest in Richtung der Öffnungen offenen Rahmen mehrere und zumindest in einem Bereich an eine Form des Dichtkörpers angepasste Haltestege, so dass die Haltekraft durch die Haltestege auf den Dichtkörper in der Ruheposition ausgeübt wird. Die Haltekraft der Haltestege kann beispielsweise über vorgespannte Haltestege oder durch Federn zwischen den Haltestegen und dem Rahmen ausgeübt werden

Durch Ausübung einer Haltekraft aufgrund einer Klemmwirkung kann der Dichtkörper mit einer definierten Haltekraft in der Halterung gehalten werden. In einer bevorzugten Ausführungsform umfasst die Klemmvorrichtung zwischen einem zumindest in Richtung der Öffnungen offenen Rahmen mehrere vorgespannte und zumindest in einem Bereich an eine Form des Dichtkörpers angepasste Haltestege, so dass die Haltekraft durch die vorgespannten Haltestege auf den Dichtkörper in der Ruheposition ausgeübt wird. Solche Halterungen sind einfach zu fertigen und stellen eine definierte und reproduzierbare Haltekraft für einen Dichtkörper zur Verfügung. Die Form der Haltestege ist dabei auf die Form des jeweiligen Dichtkörpers angepasst.

Gemäss der Erfindung ist der Dichtkörper mit der Halterung über ein mechanisches Rückholmittel in einer geeigneten Weise verbunden, und das mechanische Rückholmittel ist dazu vorgesehen, den aus der Halterung aufgrund einer Strömungsgeschwindigkeit des Mediums oberhalb des Schwellenwertes entferneten Dichtkörper nach Rückkehr der Strömungsgeschwindigkeit des Mediums zu Normalbedingungen aus der Dichtposition in die Ruheposition in der Halterung zurückzuholen. Somit kann das Sicherheitsventil nach einer erfolgten Abdichtung einer Öffnung durch den aus der Halterung entfernten Dichtkörper ohne Ausbau aus dem Rohrsystem für den Normalbetrieb wieder verwendbar gemacht werden.

In einer bevorzugten Ausführungsform umfasst das mechanische Rückholmittel einen federgelagerten Seilzug, dessen Federkraft so angepasst ist, dass die Federkraft ausreicht, um den Dichtkörper gegebenenfalls gegen ein unter Normalbedingungen das Sicherheitsventil hindurchströmendes Medium in die Halterung zurückzuholen, und die Federkraft des Seilzugs und die Haltekraft der Halterung sind so angepasst, dass Federkraft und Haltekraft zusammen zu gering sind, um den Dichtkörper bei einer Strömungsgeschwindigkeit des durch das Sicherheitsventil hindurchströmende Mediums oberhalb des Schwellenwertes in der Halterung zu halten. Der Begriff Seilzug umfasst dabei eine Rückholfeder, beispielsweise in einem Gehäuse gelagert, und ein mit der Rückholfeder verbundenes Seil. Das Seil ist dann zur Zurückholung des Dichtkörpers am Dichtkörper geeignet befestigt. Mit der Federlagerung kann die Rückholkraft genau und reproduzierbar eingestellt werden, so dass ein Entfernen des Dichtkörpers aus der Halterung bei Strömungsgeschwindigkeiten oberhalb eines Schwellenwertes gewährleistet ist. Das Zurückholen des Dichtkörpers geschieht außerdem automatisch bei Vorliegen der Nomalbedingungen, da dafür die Federkraft den ausgeübten Druck auf den Dichtkörper übersteigt. In einer besonders bevorzugten Ausführungsform übt der Seilzug über die Federkraft die Haltekraft auf den Dichtkörper aus. Hier werden keine weiteren Komponenten für die Halterung benötigt. Vorzugsweise ist der Dichtkörper in dieser Ausführungsform eine Kugel, da sich der Dichtkörper bei fehlender weiterer Halterung um das Seil des Seilzugs drehen könnte. Nur bei einer Kugel ist die Dichtwirkung unabhängig von der Ausrichtung der Kugel.

In einer weiteren Ausführungsform besitzt der Hohlraum um Dichtkörper und Halterung zumindest in zwei unterschiedliche Raumrichtungen eine Ausdehnung, die größer als die Abmessungen des Dichtkörpers und der Halterung ist, wobei die Ausdehnung und Form des Hohlraums so gewählt ist, dass das Medium den Hohlraum ohne zusätzlichen Strömungswiderstand durchströmen kann. Die Ausdehnung entspricht dabei einer Querschnittsfläche in Richtung der Öffnungen gesehen. Ist die Querschnittsfläche, die nicht durch die Halterung und den Dichtkörper versperrt ist, so groß wie oder größer als die Querschnittsfläche der Einlassöffnung, so kann das Medium ohne zusätzliche Hindernisse, die einen erhöhten Strömungswiderstand bilden würden, den Hohlraum durchströmen. Damit ist der Strömungswiderstand des Mediums durch das Rohrsystem und nicht durch das Sicherheitsventil bestimmt.

In einer weiteren Ausführungsform sind die sich verjüngenden Abschnitte des Hohlraums und die Ruheposition des Dichtkörpers in einer Ebene angeordnet und das Sicherheitsventil ist zum Einbau in ein Rohrsystem in einer Ausrichtung mit der Ebene in horizontaler Position vorgesehen. Durch die horizontale Ausrichtung des Sicherheitsventils hat die Schwerkraft keinen richtungsabhängigen Einfluss auf die Entfernung des Dichtkörpers zur einen oder anderen Öffnung hin.

Die Erfindung betrifft des Weiteren ein Verfahren zum Betreiben eines Sicherheitsventils gemäß der vorliegenden Erfindung zum Einsatz in einem Rohrsystem zum bidirektionalen Transport von Medien umfassend die Schritte
- Einbau zumindest eines der Sicherheitsventile in das Rohrsystem durch Verbinden der Öffnungen mit dem Rohrssystem, so dass das Medium durch das Sicherheitsventil hindurchströmen kann, wobei sich der Dichtkörper reversibel in der Ruheposition in der Halterung befindet,
- Betreiben des Rohrsystems bei Normalbedingungen, so dass das Medium durch den Hohlraum des Sicherheitsventile hindurchströmenden kann und die Halterung eine Haltekraft auf den Dichtkörper ausübt, die ausreicht, um unter Normalbedingungen den Dichtkörper in der Ruheposition zu halten,
- Abdichten einer der Öffnungen durch den Dichtkörper in einer momentan vorliegenden Strömungsrichtung bei einer Strömungsgeschwindigkeit des Mediums oberhalb eines Schwellenwertes, indem die Strömungsgeschwindigkeit des Mediums oberhalb des Schwellwertes ausreicht, um den Dichtkörper aus der Halterung zu entfernen, wonach der Dichtkörper in dem sich jeweils zu den Öffnungen hin zumindest in einem Abschnitt geeignet verjüngenden Hohlraums in einer Dichtposition verbleibt, so dass der Hohlraum zu dieser Öffnung hin für das Medium abgedichtet ist, und Zurückholens des Dichtkörpers aus der Dichtposition in die Ruheposition nach Rückkehr der Strömungsgeschwindigkeit des Mediums zu Normalbedingungen mittels eines mechanische Rückholmittels, das den Dichtkörper mit der Halterung in einer geeigneten Weise verbindet.

In einer Ausführungsform ist der Dichtkörper dabei eine Kugel.

In einer weiteren Ausführungsform des Verfahrens ist das mechanisches Rückholmittel ein federgelagerter Seilzug, dessen Federkraft so angepasst ist, dass die Federkraft ausreicht, um den Dichtkörper selbst gegen ein unter Normalbedingungen durch das Sicherheitsventil hindurchströmendes Medium in die Halterung zurückzuholen, wobei die Federkraft des Seilzugs und die Haltekraft der Halterung so angepasst sind, dass Federkraft und Haltekraft zusammen zu gering sind, um den Dichtkörper bei einer Strömungsgeschwindigkeit des Mediums oberhalb des Schwellenwertes in der Halterung zu halten. Zwar strömt das Medium im Fall der abgedichteten Auslassöffnung nicht mehr durch das Sicherheitsventil, allerdings muss der Dichtkörper gegen den auf den Dichtkörper anstehenden Druck des Mediums entfernt werden. Selbst wenn das Medium im Rohrsystem ohne Druck steht, fängt das Medium nach Lösen des Dichtkörpers aus der Dichtposition wieder an, durch das Sicherheitsventil zu strömen, bei einer gewissen Entfernung des Dichtkörpers zur Dichtposition gegebenenfalls wieder mit Normalbedingungen.

### Kurze Beschreibung der Abbildungen

Diese und andere Aspekte der Erfindung werden im Detail in den Abbildungen wie folgt gezeigt:
- Fig.1:: eine Ausführungsform eines erfindungsgemäßen Sicherheitsventils (a) im seitlichen Schnitt, (b) im Querschnitt entlang der Ebene A (siehe (a)) und (c) im Querschnitt entlang der Ebene B (siehe (a)).
- Fig.2:: eine andere Ausführungsform eines erfindungsgemäßen Sicherheitsventils im seitlichen Schnitt mit konischer Verjüngung.
- Fig.3:: verschiedene Ausführungsformen des Dichtkörpers im Rahmen der vorliegenden Erfindung mit (a) einem doppelkonischen Dichtkörper, (b) einem doppelkonischen Dichtkörper mit geradem Mittelteil, (c) einer Kugel als Dichtkörper und (d) einer Kugel mit einem metallischen Kern und einer elastischen Hülle.
- Fig.4:: ein Sicherheitsventil mit einem magnetischen Rückholmittel, das Teil der Erfindung nicht darstellt.
- Fig.5:: eine Halterung mit Magneten für (a) eine Kugel als Dichtkörper und (b) für einen doppelkonusförmigen Dichtkörper, die Teil der Erfindung nicht darstellt.
- Fig.6:: eine andere Ausführungsform einer mechanischen Halterung als Klemmvorrichtung für eine Kugel als Dichtkörper mit (a) einem Rahmen mit zwei Haltestegen und mit (b) vier Haltestegen.
- Fig.7:: eine Ausführungsform eines erfindungsgemäßen Sicherheitsventils mit einem mechanischen Rückholmittel.
- Fig.8:: eine Ausführungsform eines erfindungsgemäßen Verfahrens zum Betreiben eines Sicherheitsventils in einem Rohrsystem.
- Fig.9:: eine weitere Ausführungsform des erfindungsgemäßen Sicherheitsventils mit einer Positionsanzeige für den Dichtkörper.

### Detaillierte Beschreibung der Ausführungsbeispiele

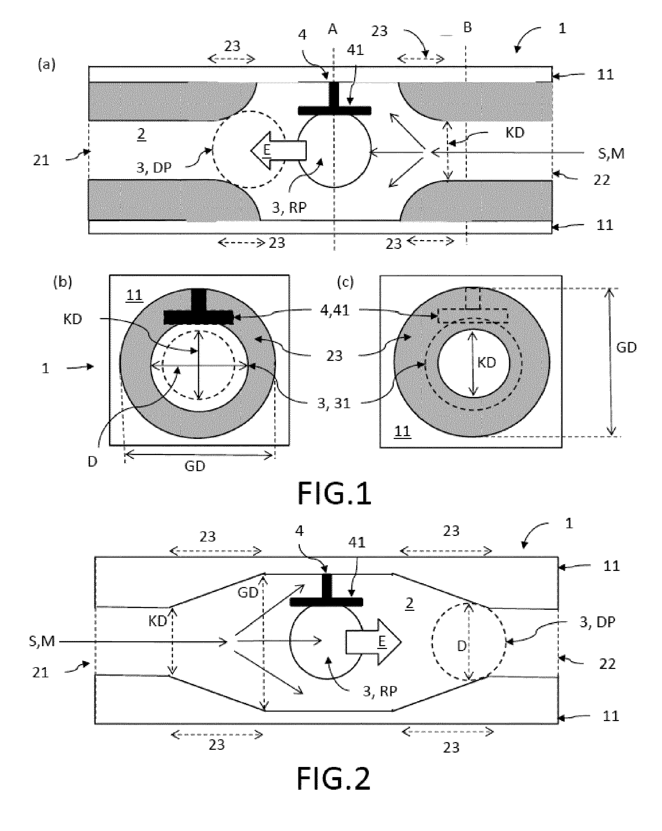

Fig. 1 zeigt eine Ausführungsform eines erfindungsgemäßen Sicherheitsventils 1 im (a) seitlichen Schnitt entlang der Strömungsrichtung S des Mediums M durch den Hohlraum 2 des Sicherheitsventils 1 hindurch sowie (b) im Querschnitt entlang der Ebene A und (c) im Querschnitt entlang der Ebene B. Das strömende Medium M ist durch die durchgezogenen Pfeile dargestellt, die Verzweigung der Pfeile soll das Umströmen des Dichtkörpers 3 darstellen. Die Ebenen A und B sind im Teil (a) der Fig.1 angegeben. Das Sicherheitsventil 1 umfasst einen durchgehenden Hohlraum 2 mit zwei Öffnungen 21 und 22 zum Anschluss an das Rohrsystem 7. Der Hohlraum besitzt in dieser Ausführungsform zwischen dem sich verjüngenden Abschnitt 23 und den Öffnungen einen kreisförmigen Querschnitt, dessen Durchmesser gleich dem kleinsten Durchmesser KD des sich verjüngender Abschnitts 23 des Hohlraums 2 ist. Der mittlere Bereich des Hohlraums 2 besitzt ebenfalls einen kreisförmigen Querschnitt, allerdings mit größerem Durchmesser GD, der gleich dem größten Durchmesser GD des sich verjüngenden Abschnitts 23 ist. Im Hohlraum 2 ist ein Dichtkörper 3 in Form einer Kugel 31 mit einem Kugeldurchmesser D angeordnet. Der Kugeldurchmesser D ist dabei größer als die kleinsten Durchmesser KD der verjüngenden Abschnitte, so dass eine Abdichtung zu beiden Öffnungen 21 und 22 hin möglich ist. Die Kugel 31 ist in der Halterung 4 reversibel in einer Ruheposition RP gehaltert. Dabei sind Halterung 4 und Hohlraum 2 so ausgestaltet, dass das durch das Rohrsystem 7 bei Normalbedingungen NB hindurchströmende Medium M das Sicherheitsventil 1 unabhängig von der Strömungsrichtung S passieren kann, ohne dass die Halterung 4 und der Dichtkörper 3 den Durchfluss hemmen. Dazu ist die Querschnittsfläche des Hohlraums 2 in Bereich der Halterung 4 und im Bereich der Öffnungen 21, 22 so gewählt, dass die frei durchströmbare Fläche des Querschnitts des Hohlraums 2 im Bereich der Halterung 4 zumindest nicht kleiner ist als die Querschnittsfläche der Öffnung 21 oder 22, siehe dazu die gezeigten Querschnitt in Fig.1(b) und (c). Teil (c) zeigt den Querschnitt in der Ebene A, die dem Querschnitt des Hohlraums 2 im Bereich der Halterung 4 entspricht. Die frei durchströmbare Fläche in der Ebene A wird durch den grau unterlegten Bereich dargestellt. Die frei durchströmbare Fläche hat einen Durchmesser DG, wovon die von der Kugel 31 abgedeckte Fläche mit Durchmesser D abgezogen werden muss, so dass der grau dargestellte Bereich für das Medium M frei durchströmbar bleibt. Die in Teil (b) dargestellte gestrichelte Fläche entspricht der Querschnittsfläche der Öffnung 21, die durch die Kugel 31 verdeckt ist. Aus Teil (b) ist damit auch ersichtlich, dass die Kugel 31 als Dichtkörper 3 einen geeignet großen Durchmesser D besitzt, um die Öffnung 21 nach Entfernung E aus der Halterung 4 vollständig abzudichten. Die umgekehrte Perspektive ist in Teil (c) gezeigt, wo der Querschnitt des Sicherheitsventils 1 in Ebene B gezeigt ist. Die gestrichelt dargestellten Komponenten sind die Kugel 31 als Dichtkörper 3 und die Halterung 4, die beide durch die Öffnung 21 mit Durchmesser KD hindurch nicht bzw. nicht vollständig zu sehen sind. Die Halterung 4 übt eine Haltekraft HK auf den Dichtkörper 3 aus, so dass der Dichtkörper 3 bei Normalbedingungen NB in der Halterung 4 verbleibt. Die Haltekraft HK der Halterung 4 auf den Dichtkörper 3 ist aber so angepasst, dass der Dichtkörper 3 bei einer Strömungsgeschwindigkeit S des Mediums M oberhalb eines Schwellenwertes SW durch das strömende Medium M aus der Halterung 4 entfernt E (herausgedrückt bzw. herausgerissen) werden kann. Damit eine Abdichtung erreicht wird, verjüngt sich der Hohlraum 2 jeweils zu den Öffnungen 21,22 hin in den Abschnitten 23 des Hohlraums 2. Der aus der Halterung 4 entfernte E Dichtkörper 3 wird durch das strömende Medium in die Dichtposition DP gedrückt, womit der Hohlraum 2 dann zu dieser Öffnung 21 hin für das Medium M abgedichtet ist. Die Wand des Hohlraums 11 ist dabei aus einem geeigneten Material, beispielsweise Metall oder Plastik, gefertigt. In einer Ausführungsform ist das Metall nichtmagnetisch, beispielsweise Aluminium.

Fig.2 zeigt eine andere Ausführungsform eines erfindungsgemäßen Sicherheitsventils 1 im seitlichen Schnitt mit konischer Verjüngung 23. Auch hier sind die größten und kleinsten Querschnitte KD, GD des konischen Abschnitts 23 so gewählt, dass der Dichtkörper 3 in Form einer Kugel 31 in den konischen Abschnitten 23 nach Entfernen E aus der Halterung durch das Medium M so hineingepresst wird, dass hier der Dichtkörper 3 (hier als Kugel ausgeführt) die Öffnung 22 zuverlässig abdichtet. Das strömende Medium M ist durch die durchgezogenen Pfeile dargestellt, die Verzweigung der Pfeile soll das Umströmen des Dichtkörpers 3 darstellen. Das Medium strömt S hier durch die Öffnung 21 hinein und durch die Öffnung 22 hinaus (umgekehrte Strömungsrichtung wie in Fig.1). Die Halterung 4 ist so ausgeführt, dass das Entfernen E des Dichtkörpers 3 zuverlässig gelingt und unabhängig von der Strömungsrichtung (Einlassöffnung 21 und Auslassöffnung 22 oder umgekehrt) ist, kann das Sicherheitsventil 1 in beliebiger Orientierung in das Rohrsystem 7 eingebaut werden.

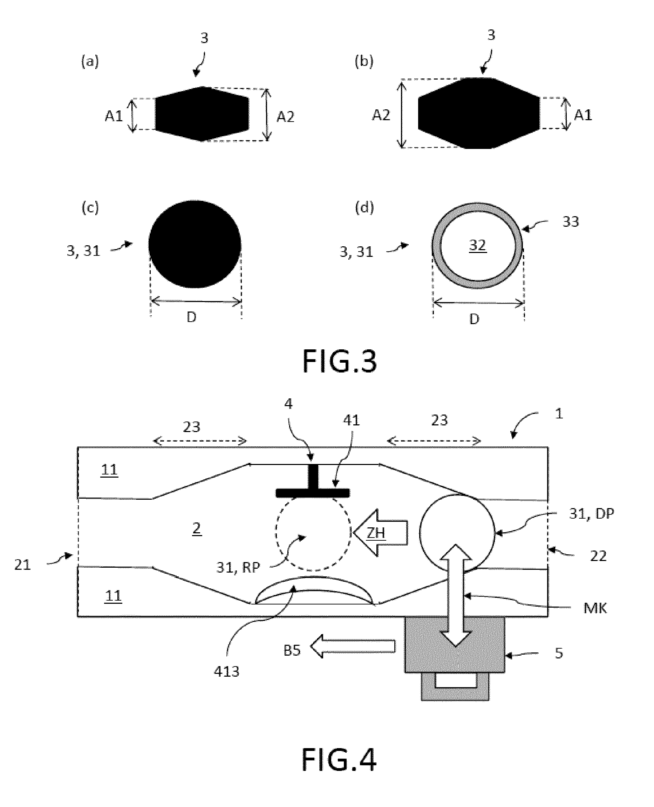

Fig.3 zeigt verschiedene Ausführungsformen des Dichtkörpers 3 im Rahmen der vorliegenden Erfindung mit (a) einem doppelkonischen Dichtkörper 3, (b) einem doppelkonischen Dichtkörper 3 mit geradem Mittelteil, (c) einer Kugel 31 als Dichtkörper 3 und (d) einer Kugel 31 mit einem metallischen Kern 32 und einer elastischen Hülle 33. Der doppelkonische Dichtkörper 3 nach (a) kann beispielsweise in einem Hohlraum wie in Fig.2 gezeigt zur sicheren Abdichtung verwendet werden. Hierbei muss für eine erfolgreiche Abdichtung die Abmessung A2 größer als der kleinste Durchmesser KD des konischen Abschnitts 23 sein und die Abmessung A1 muss kleiner als der größte Durchmesser GD des konischen Abschnitts 23 sein, damit der Dichtkörper 3 überhaupt in den konischen Abschnitt 23 durch das Medium M hineingedrückt werden kann. Teil (b) zeigt einen doppelkonischen Dichtkörper 3 mit geradem Mittelteil, wobei das gerade Mittelteil für die Ausübung einer stärkeren Haltekraft auf den Dichtkörper 3 vorteilhaft ist. Auch dieser Dichtkörper kann in einem wie in Fig.2 gezeigten Hohlraum verwendet werden. Für die Abmessungen A1 und A2 gelten die gleichen Bemerkungen wie zu Fig.3(a). Teil (c) zeigt die bereits in Fig.1 gezeigte Kugel 31 als Dichtkörper 3 mit einem Kugeldurchmesser D. Zu der Größe des Kugeldurchmessers D relativ zu den sich verjüngenden Abschnitten 23 wird auf Fig.1 verwiesen. Teil (d) zeigt eine Kugel 31, die einen metallischen Kern 32 und eine elastische Hülle 33 besitzt. Die elastische Hülle 33 kann gegebenenfalls eine Dicke von lediglich 1 mm oder weniger haben. Solche geringen Dicken reichen bereits aus, um trotz vorhandener Partikel auf den abzudichtenden Flächen dennoch eine ausreichenende Dichtigkeit zu erreichen. Falls die elastische Hülle 33 dicker ist, wird ein festerer Sitz der Kugel 31 in der Dichtposition DP erreicht, was die Zuverlässigkeit der Abdichtung erhöht. Allerdings ist das Entfernen der Kugel 31 aus der Dichtposition DP entsprechend schwerer. Die anderen Dichtkörper 3 mit anderen Formen können ebenfalls eine elastische Hülle 33 besitzen. Hier gelten im Prinzip die gleichen Bemerkungen wie zu der umhüllten Kugel 31 aus Teil (d). In anderen Ausführungsformen kann der Dichtkörper 3 aus keramischem Material bestehen oder einen keramischen Kern 32 mit elastischer Hülle 33 besitzen. Keramisches Material zeichnet sich durch seine Korrosionsbeständigkeit aus.

Fig.4 zeigt ein Sicherheitsventil 1 mit einem magnetischen Rückholmittel 5, das Teil der Erfindung nicht darstellt. Die Materialien des Sicherheitsventil 1, die den Hohlraum 2 zumindest im Bereich zwischen der Dichtposition DP des Dichtkörpers 3 im verjüngenden Abschnitt 23 und der Ruheposition RP umhüllen, sind hier vorzugsweise nicht-magnetische Materialien. Zumindest sind die Materialien im Wesentlichen nicht-magnetisch. Der Dichtkörper hingegen umfasst zumindest zum überwiegenden Teil, bevorzugt vollständig, ein ferromagnetisches Material. Dadurch kann das magnetische Rückholmittel 5 (beispielsweise ein starker Permanentmagnet oder ein Elekromagnet) eine magnetische Kraft MK auf den Dichtkörper 3 ausüben. Dazu muss sich das magnetische Feld des Rückholmittels 5 bis zum Dichtkörper 3 erstrecken, was insbesondere bei nichtmagnetischen Wandmaterialien für den Hohlraum 2 der Fall ist. Damit kann dann mittels des außerhalb des Sicherheitsventils 1 bewegten Rückholmittels 5 der Dichtkörper 3 von der Dichtposition DP in die Ruheposition RP zurückgeholt werden. Damit der Dichtkörper 3 in die unmittelbare Nähe des haltenden Magneten 41 der Halterung 4 zur Fixierung des Dichtkörpers 3 in der Ruheposition gelangen kann, ist im Hohlraum 2 gegenüber der Halterung 4 eine geeignet geformte nicht-magnetische Spange 413 angeordnet. Die Form der Spange 413 ist so gewählt, dass sie einerseits die Strömungseigenschaften des Mediums M im Hohlraum 2 nicht wesentlich verändert und andererseits den Dichtkörper 3 in Richtung der Halterung 4 beim Zurückholen ZH geleitet.

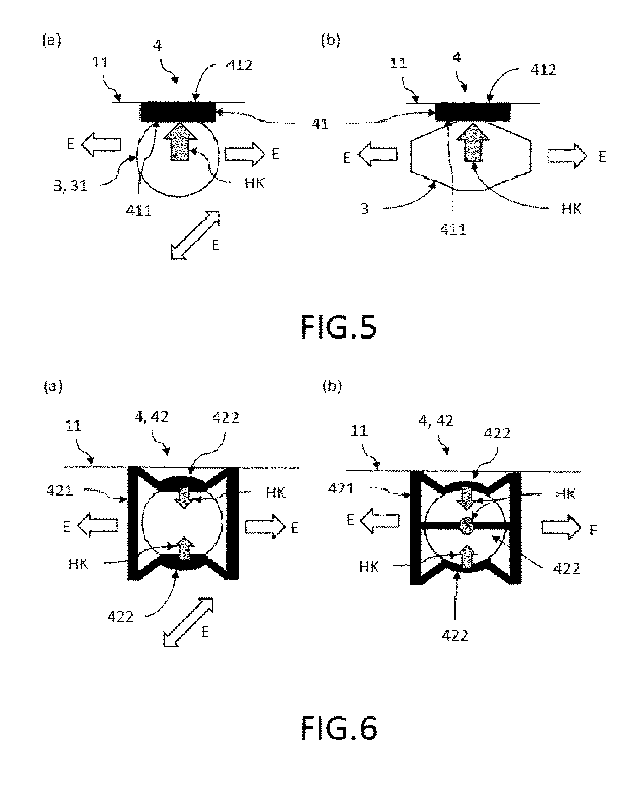

Fig.5 zeigt eine Halterung 4, die Teil der Erfindung nicht darstellt, mit Magneten 41 für (a) eine Kugel 31 als Dichtkörper 3 und (b) für einen doppelkonusförmigen Dichtkörper 3. Die Kugel 31 in Teil (a) in Kontakt zum Magneten 41 ist in einer entsprechend geformten Vertiefung der ersten Seite 411 des Magneten gelagert, so dass sich eine größere Fläche der Kugel 31 in direktem Kontakt zum Magneten 41 befindet und dieser somit eine größere Haltekraft HK auf die Kugel ausüben kann. Auch in Teil (b) ist der Magnet 41 flächenförmig zum Halten des konischen Dichtkörpers 3 auf der ersten Seite 411 des Magneten 411 mit einer entsprechend auf die Form des Dichtkörpers 3 angepassten Vertiefung ausgestaltet. Die andere zweite Seite 412 des Magneten 41 ist direkt an der Wand des Hohlraums 2 befestigt. Somit stellen die hier gezeigten Magneten 41 bereits die vollständige Halterung 4 der Dichtkörper 3 dar. Diese Form der Halterung 4 ist einfach und zuverlässig ausgeführt und kann leicht in das Sicherheitsventil 1 integriert werden.

Fig.6 zeigt eine andere Ausführungsform einer Halterung 4 für eine Kugel 31 als Dichtkörper 3 mit (a) einem Rahmen 421 und zwei darin befestigten Haltestegen 422 und mit (b) vier Haltestegen 422 am Rahmen 421, wobei hier der vierte Haltesteg 422 von der Kugel 31 verdeckt wird. Die Klemmvorrichtung 42 übt über mehrere vorgespannte und zumindest in einem Bereich an eine Form des Dichtkörpers 3 angepasste Haltestege 422 die Haltekraft HK auf den Dichtkörper 3 in der Ruheposition RP aus. Die Haltestege 422 sind jeweils in einem Rahmen 421 gehaltert, über den die Klemmvorrichtung 42 als Halterung 4 an der Wand 11 des Hohlraums 2 befestigt ist. Durch die Form und Vorspannung der Haltestege 422 kann die gewünschte Haltekraft präzise und reproduzierbar eingestellt werden. Der Rahmen 421 besitzt offene Seitenwände (hier nicht erschichtlich), durch die die Kugel 31 (und in anderen Ausführungsformen anders geformte Dichtkörper 3) in Richtung der Öffnungen 21,22 entfernt E werden kann. Die Klemmvorrichtung gemäß Teil (a) ermöglich auch eine Entfernung E der Kugel 31 in eine Richtung aus der Blattoberfläche hinaus bzw. hinein, was durch den schräg ausgerichteten Pfeil E schematisch dargestellt ist, da ein mittlerer Haltesteg 421 wie in Teil (b) fehlt. Dafür ermöglicht die Klemmvorrichtung gemäß Teil (b) einen sicheren Sitz. Der hier sichtbare mittlere Haltesteg 422 übt eine zusätzliche Haltekraft HK auf die Kugel 31 in Richtung der Blattoberfläche aus, hier als grau unterlegtes "X" dargestellt.

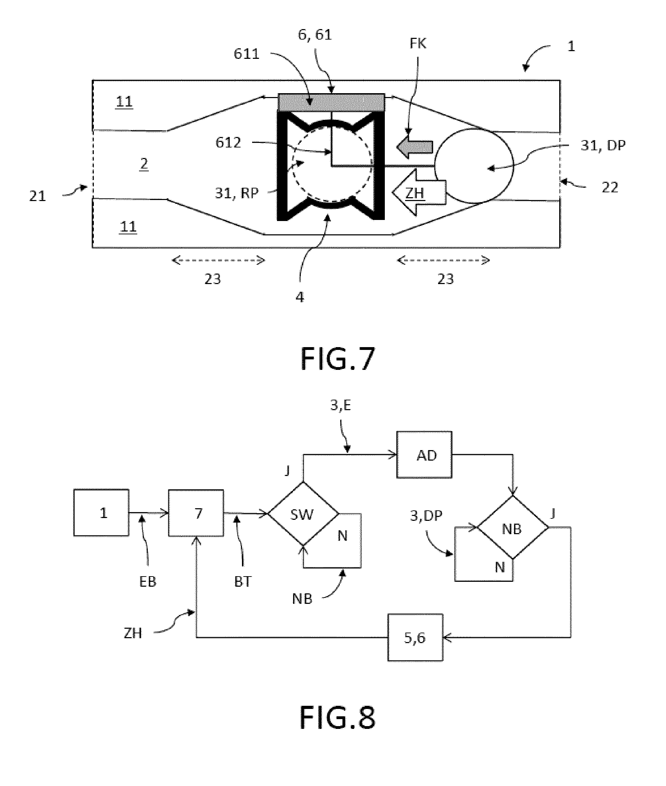

Fig.7 zeigt eine Ausführungsform eines erfindungsgemäßen Sicherheitsventils 1 mit einem mechanischen Rückholmittel 6. Das mechanische Rückholmittel 6 umfasst einen federgelagerten Seilzug 61, dessen Federkraft FK so angepasst ist, dass die Federkraft FK ausreicht, um den Dichtkörper 3 gegebenenfalls gegen ein unter Normalbedingungen NB das Sicherheitsventil 1 hindurchströmendes Medium M in die Halterung 4 zurückzuholen ZH. Die Federkraft FK des Seilzugs 61 und die Haltekraft HK der Halterung 4 sind so angepasst, dass Federkraft FK und Haltekraft HK zusammen zu gering sind, um den Dichtkörper 3 bei einer Strömungsgeschwindigkeit des durch das Sicherheitsventil 1 hindurchströmende Mediums M oberhalb des Schwellenwertes SW in der Halterung 4 zu halten. Der Begriff Seilzug 61 umfasst dabei eine Rückholfeder, hier in dem grau dargestellten Gehäuse 611 gelagert, und ein mit der Rückholfeder verbundenes Seil 612. Das Seil 612 ist zur Zurückholung ZH des Dichtkörpers 3 am Dichtkörper 3 befestigt. Mit der Federlagerung kann die Federkraft FK als Rückholkraft genau und reproduzierbar eingestellt werden, so dass ein Entfernen des Dichtkörpers 3 aus der Halterung 4 bei Strömungsgeschwindigkeiten oberhalb eines Schwellenwertes gewährleistet ist. Das Zurückholen ZH des Dichtkörpers 3 geschieht außerdem automatisch bei Vorliegen der Nomalbedingungen NB, da dafür die Federkraft FK den ausgeübten Druck auf den Dichtkörper 3 übersteigt.

Fig.8 zeigt eine Ausführungsform eines erfindungsgemäßen Verfahrens zum Betreiben eines Sicherheitsventils 1 in einem Rohrsystem 7, das gegebenenfalls auch einen bidirektionalen Transport von Medien M ermöglichen kann. Nach einem erfolgten Einbau EB zumindest eines der Sicherheitsventile 1 in das Rohrsystem 7 durch Verbinden der Öffnungen 21,22 mit dem Rohrsystem 7, so dass das Medium M durch das Sicherheitsventil 1 hindurchströmen S kann, wird das Rohrsystem 7 unter Normalbedigungen NB betrieben BT. Dabei übt die Halterung 4 eine Haltekraft HK auf den Dichtkörper 3 aus, die ausreicht, um unter Normalbedingungen NB den Dichtkörper 3 in der Ruheposition RP zu halten. Wird dabei der Schwellenwert SW nicht ("N") überschritten, so strömt das Medium weiterhin durch das Sicherheitsventil 1 hindurch. Falls der Schwellenert SW dagegen überschritten wird, wird eine der Öffnungen 21,22 durch den Dichtkörper 3 in Richtung der momentan vorliegenden Strömungsrichtung nach dem Entfernen E des Dichtkörpers 3 aus der Halterung 4 abgedichtet AD. Hier reicht der Druck des Mediums gegen den Dichtkörper bei der Strömungsgeschwindigkeit des Mediums M oberhalb des Schwellwertes SW aus, um den Dichtkörper 3 aus der Halterung 4 zu entfernen, so dass der Hohlraum 2 zu dieser Öffnung 21,22 hin durch den in Dichtposition DP gedrückten Dichtkörper 3 für das Medium M abgedichtet ist. Sobald das Medium M im Rohrsystem 7 und damit auch im Sicherheitsventil 1 keinem erhöhten Druck mehr ausgesetzt ist, was einer Strömungsgeschwindigkeit unterhalb des Schwellenwertes in einem nicht abgedichteten Rohrsystem entsprechen würde, befindet sich das Medium unter Normalbedingungen. Solange die Normalbedingungen nicht erreicht sind (NB = "N") verbleibt der Dichtkörper aufgrund des Drucks des Mediums M auf den Dichtkörper 3 in der Dichtposition DP. Unter Normalbedingungen NB ist dagegen das Rückholmittel in der Lage, den Dichtkörper in die Ruheposition in der Halterung 4 zurückzuholen. Nach zurückgeholtem Dichtkörper durchströmt das Medium M das Rohrsystem 7 wieder unter Normalbedingungen NB.

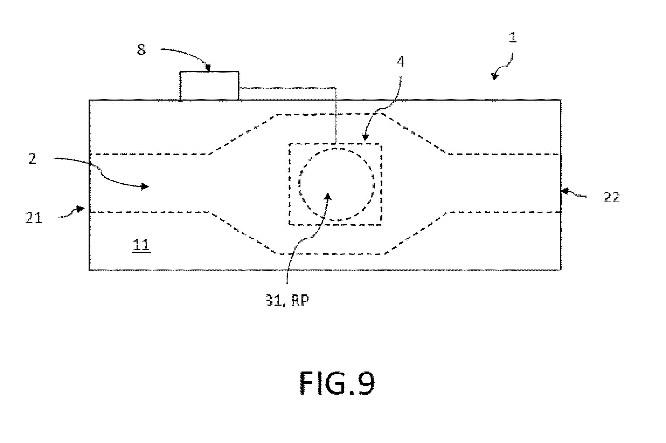

Fig.9 zeigt eine weitere Ausführungsform des erfindungsgemäßen Sicherheitsventils 1 mit einer Positionsanzeige 8 für den Dichtkörper 3. Hier sind die sich innerhalb des Sicherheitsventils befindlichen Komponenten gestrichelt dargestellt. Die Verbindung der Positionsanzeige 8 mit der Halterung 4 ist aus Übersichtsgründen als durchgezogene Linie dargestellt, obwohl diese zumindest teilweise ebenfalls innerhalb des Sicherheitsventils 1 verläuft. Diese Positionsanzeige gibt an, in welcher Position (Dichtposition DP oder Ruheposition RP) sich der Dichtkörper 3 gerade befindet. Beispielsweise wird die Anwesenheit des Dichtkörpers 3 in der Ruheposition RP in der Halterung 4 mittels eines kapazitiven Sensors oder mittels eines über einen metallischen Dichtkörper 3 hergestellten elektrischen Kontakts in der Halterung oder über einen Druckschalter, der durch den in der Ruheposition anwesenden Dichtkörper 3 betätigt wird, festgestellt. Ebenso kann umgekehrt durch voranstehend angeführte Sensoren oder Schalter das Verlassen der Ruheposition für den Dichtkörper 3 festgestellt werden. Die Positionsanzeige 8 ist dabei bespielsweise eine optische Anzeige wie eine leuchtende LED bei einem Dichtkörper 3 in Ruheposition RP. Durch die Positionsanzeige 8 kann einerseits die erfolgreiche Zurückholung ZH eines Dichtkörpers 3 nach erneutem Erreichen der Normalbedingungen NB im Rohrsystem 7 kontrolliert werden. Andererseits kann festgestellt werden, welches von gegebenenfalls vielen Sicherungsventilen 1 die Unterbrechung des Medienflusses ausgelöst hat (Abdichtung einer Öffnung) und bei welchem Sicherungsventil 1 gegebenenfalls die Zurückholung ZH des Dichtkörpers 3 in die Halterung 4 nicht erfolgreich war.

Die hier gezeigten Ausführungsformen stellen nur Beispiele für die vorliegende Erfindung dar und dürfen daher nicht einschränkend verstanden werden. Alternativen durch den Fachmann in Erwägung gezogene Ausführungsformen sind gleichermaßen vom Schutzbereich der vorliegenden Erfindung umfasst.

### Liste der Bezugszeichen

- 1: Sicherheitsventil
- 2: Hohlraum
- 21, 22: Öffnungen zum Anschluss an ein Rohrsystem
- 23: sich verjüngender Abschnitt des Hohlraums
- 3: Dichtkörper
- 31: Kugel als Dichtkörper
- 32: metallisches Material des Dichtkörpers
- 33: elastisches Material des Dichtkörpers
- 4: Halterung des Dichtkörpers
- 41: Magnet der Halterung
- 411: erste Seite des Magneten
- 412: zweite Seite des Magneten
- 413: (nicht-magnetische) Spange
- 42: Klemmvorrichtung als Halterung
- 421: Rahmen der Klemmvorrichtung
- 422: vorgespannte Stege der Klemmvorrichtung
- 5: magnetisches Rückholmittel
- 6: mechanisches Rückholmittel
- 61: Seilzug im Rückholmittel
- 611: Gehäuse für Rückholfeder
- 612: Seil des Seilzugs
- 7: Rohrsystem
- 8: Positionsanzeige für den Dichtkörper

- A1, A2: Abmessungen des Dichtkörpers (erste / zweite)
- AD: Abdichten der Öffnung des Sicherheitsventils
- B5: Schieben des magnetischen Rückholmittels entlang des Sicherheitsventils in Richtung der Halterung
- BT: Betreiben des Rohrsystems
- D: Durchmesser der Kugel als der Dichtkörper
- DP: Dichtposition des Dichtkörpers
- E: Entfernen des Dichtkörpers aus der Halterung aufgrund einer Strömungsgeschwindigkeit des Mediums oberhalb eines Schwellenwertes
- EB: Einbau des Sicherheitsventils in das Rohrsystem
- FK: Federkraft des Seilzugs
- GD: größter Durchmesser des sich verjüngender Abschnitts des Hohlraums
- KD: kleinster Durchmesser des sich verjüngender Abschnitts des Hohlraums
- HK: Haltekraft der Halterung auf den Dichtkörper
- MK: magnetische Kraft des Rückholmittels auf den Dichtkörper
- NB: Normalbedingungen
- RP: Ruheposition des Dichtkörpers
- S: Strömungsrichtung des Mediums, Strömung
- SW: Schwellenwert
- ZH: Zurückholen des Dichtkörpers von der Dichtposition in die Ruheposition

## Patentansprüche

1. Ein Sicherheitsventil (1) zum Einsatz in einem Rohrsystem (7) zum bidirektionalen Transport von Medien (M), wobei das Sicherheitsventil (1) gleichermaßen für sich ändernde Strömungsrichtungen im Rohrsystem verwendet werden kann, indem es einen durchgehenden Hohlraum (2) mit mindestens zwei Öffnungen (21,22) zum Anschluss an das Rohrsystem (7) umfasst, wobei im Hohlraum (2) ein Dichtkörper (3) mit geeigneten Abmessungen (A1, A2, D) in einer Halterung (4) reversibel in einer Ruheposition (RP) gehaltert wird und die Halterung (4) und der Hohlraum (2) so ausgestaltet sind, dass die Halterung (4) eine Haltekraft (HK) auf den Dichtkörper (3) ausübt, so dass der Dichtkörper (3) bei Normalbedingungen (NB) in der Ruheposition (RP) in der Halterung (4) unabhängig von der Einbaurichtung des Sicherheitsventils verbleibt, und dass die Haltekraft (HK) der Halterung (4) auf den Dichtkörper (3) so angepasst ist, dass der Dichtkörper (3) bei einer Strömungsgeschwindigkeit (S) des Mediums (M) oberhalb eines Schwellenwertes (SW) durch das strömende Medium (M) aus der Halterung (4) in jede mögliche Strömungsrichtung entfernt (E) werden kann, und dass sich der Hohlraum (2) jeweils zu den Öffnungen (21, 22) hin zumindest in einem Abschnitt (23) des Hohlraums (2) geeignet verjüngt, so dass sich der aus der Halterung (4) entfernte (E) Dichtkörper (3) aufgrund der Strömungsgeschwindigkeit in einer Dichtposition (DP) in dem sich verjüngenden Abschnitt (23) verbleibt, damit der Hohlraum (2) zu dieser Öffnung (21) hin für das Medium (M) abgedichtet ist,
**dadurch gekennzeichnet,**
**dass** das durch das Rohrsystem (7) bei Normalbedingungen (NB) hindurchströmende Medium (M) das Sicherheitsventil (1) unabhängig von der Strömungsrichtung (S) den Hohlraum (2) passieren und dabei um die Halterung herum strömen kann und dass der Dichtkörper (3) mit der Halterung (4) über ein mechanisches Rückholmittel (6) in einer geeigneten Weise verbunden ist und das mechanische Rückholmittel (6) dazu vorgesehen ist, den aus der Halterung (4) aufgrund einer Strömungsgeschwindigkeit des Mediums (M) oberhalb des Schwellenwertes (SW) entfernten Dichtkörper (3) nach Rückkehr der Strömungsgeschwindigkeit des Mediums (M) zu Normalbedingungen (NB) aus der Dichtposition (DP) in die Ruheposition (RP) in der Halterung (4) zurückzuholen.

2. Das Sicherheitsventil (1) nach Anspruch 1,
**dadurch gekennzeichnet,**
**dass** der sich verjüngende Abschnitt (23) konisch mit einem größten (GD) und einem kleinsten Durchmesser (KD) geformt ist, wobei der kleinste Durchmesser (KD) des konischen Abschnitts kleiner als eine erste Abmessung (A1) des Dichtkörpers (2) ist und der größte Durchmesser (GD) größer als eine zweite Abmessung (A2) des Dichtkörpers (3) ist, der zumindest in einem Bereich einen kreisförmigen Querschnitt besitzt.

3. Das Sicherheitsventil (1) nach Anspruch 1 oder 2,
**dadurch gekennzeichnet,**
**dass** die Dichtposition (DP) einer Kugel (31) als Dichtkörper (3) weniger als zwei Kugeldurchmesser (D), vorzugsweise weniger als 1,5 Kugeldurchmesser (D), noch mehr bevorzugt weniger als 1,0 Kugeldurchmesser (D), von der Ruheposition der Kugel (31) entfernt ist.

4. Das Sicherheitsventil (1) nach einem der voranstehenden Ansprüche,
**dadurch gekennzeichnet,**
**dass** der Dichtkörper (3) metallisches Material (32) oder keramisches Material (32) umfasst.

5. Das Sicherheitsventil (1) nach Anspruch 4,
**dadurch gekennzeichnet,**
**dass** der Dichtkörper (3) von einem elastischen Material (33) umhüllt wird.

6. Das Sicherheitsventil (1) nach einem der Ansprüche 1 bis 5,
**dadurch gekennzeichnet,**
**dass** die Halterung (4) eine mechanische Fixierungsvorrichtung (42), vorzugsweise eine Klemmvorrichtung (42), ist, wobei die Klemmvorrichtung (42) vorzugsweise zwischen einem zumindest in Richtung der Öffnungen offenen Rahmen (421) mehrere und zumindest in einem Bereich an eine Form des Dichtkörpers (3) angepasste Haltestege (422) umfasst, so dass die Haltekraft (HK) durch die Haltestege (422) auf den Dichtkörper (3) in der Ruheposition (RP) ausgeübt wird.

7. Das Sicherheitsventil (1) nach einem der voranstehenden Ansprüche ,
**dadurch gekennzeichnet,**
**dass** das mechanische Rückholmittel (6) einen federgelagerten Seilzug (61) umfasst, dessen Federkraft (FK) so angepasst ist, dass die Federkraft (FK) ausreicht, um den Dichtkörper (3) gegebenenfalls gegen ein unter Normalbedingungen (NB) das Sicherheitsventil (1) hindurchströmendes Medium (M) in die Halterung (4) zurückzuholen (ZH) und dass die Federkraft (FK) des Seilzugs (61) und die Haltekraft (HK) der Halterung (4) so angepasst sind, dass Federkraft (FK) und Haltekraft (HK) zusammen zu gering sind, um den Dichtkörper (3) bei einer Strömungsgeschwindigkeit des durch das Sicherheitsventil (1) hindurchströmende Mediums (M) oberhalb des Schwellenwertes (SW) in der Halterung (4) zu halten.

8. Das Sicherheitsventil (1) nach einem der voranstehenden Ansprüche ,
**dadurch gekennzeichnet,**
**dass** der Hohlraum (2) um Dichtkörper (3) und Halterung (4) zumindest in zwei unterschiedliche Raumrichtungen eine Ausdehnung besitzt, die größer als die Abmessungen (A1, A2, D) des Dichtkörpers (3) und der Halterung (4) ist, wobei die Ausdehnung und Form des Hohlraums (2) so gewählt ist, dass das Medium (M) den Hohlraum (2) ohne zusätzlichen Strömungswiderstand durchströmen kann.

9. Das Sicherheitsventil (1) nach einem der voranstehenden Ansprüche,
**dadurch gekennzeichnet,**
**dass** die sich verjüngenden Abschnitte (23) des Hohlraums (2) und die Ruheposition (RP) des Dichtkörpers (3) in einer Ebene angeordnet sind und das Sicherheitsventil (1) zum Einbau in ein Rohrsystem (7) in einer Ausrichtung mit der Ebene in horizontaler Position vorgesehen ist.

10. Ein Verfahren zum Betrieben eines Sicherheitsventils (1) gemäß Anspruch 1 zum Einsatz in einem Rohrsystem (7) zum bidirektionalen Transport von Medien (M), umfassend die Schritte
- Einbau (EB) zumindest eines der Sicherheitsventile (1) in das Rohrsystem (7) durch Verbinden der Öffnungen (21,22) mit dem Rohrsystem (7), so dass das Medium (M) durch das Sicherheitsventil (1) hindurchströmen (S) kann, wobei sich der Dichtkörper (3) reversibel in der Ruheposition (RP) in der Halterung (4) befindet,
- Betreiben (BT) des Rohrsystems (7) bei Normalbedingungen (NB), so dass das Medium (M) durch den Hohlraum (2) des Sicherheitsventile (1) hindurchströmenden kann und die Halterung (4) in der Ruheposition (RP) eine Haltekraft (HK) auf den Dichtkörper (3) unabhängig von der Einbaurichtung des Sicherheitsventils ausübt, die ausreicht, um unter Normalbedingungen (NB) den Dichtkörper (3) in der Ruheposition (RP) zu halten,
- Abdichten (AD) einer der Öffnungen (21,22) durch den Dichtkörper (3) in einer momentan vorliegenden Strömungsrichtung bei einer Strömungsgeschwindigkeit des Mediums (M) oberhalb eines Schwellenwertes (SW), indem die Strömungsgeschwindigkeit des Mediums (M) oberhalb des Schwellwertes (SW) ausreicht, um den Dichtkörper (3) aus der Halterung (4) zu entfernen, wonach der Dichtkörper (3) in dem sich jeweils zu den Öffnungen (21,22) hin zumindest in einem Abschnitt (23) geeignet verjüngenden Hohlraums (2) in einer Dichtposition (DP) verbleibt, so dass der Hohlraum (2) zu dieser Öffnung (21, 22) hin für das Medium (M) abgedichtet ist, und
- Zurückholens (ZH) des Dichtkörpers (3) aus der Dichtposition (DP) in die Ruheposition (RP) nach Rückkehr der Strömungsgeschwindigkeit des Mediums (M) zu Normalbedingungen (NB) mittels eines mechanische Rückholmittels (6), das den Dichtkörper (3) mit der Halterung (4) in einer geeigneten Weise verbindet.

11. Das Verfahren nach Anspruch 10, **dadurch gekennzeichnet, dass** das mechanisches Rückholmittel ein federgelagerter Seilzug (61) ist, dessen Federkraft (FK) so angepasst ist, dass die Federkraft (FK) ausreicht, um den Dichtkörper (3) selbst gegen ein unter Normalbedingungen (NB) das Sicherheitsventil (1) hindurchströmendes Medium (M) in die Halterung (4) zurückzuholen, wobei die Federkraft (FK) des Seilzugs (61) und die Haltekraft (HK) der Halterung (4) so angepasst sind, dass Federkraft (FK) und Haltekraft (HK) zusammen zu gering sind, um den Dichtkörper (3) bei einer Strömungsgeschwindigkeit des Mediums (M) oberhalb des Schwellenwertes (SW) in der Halterung (4) zu halten.

## Claims

1. A safety valve (1) for use in a pipe system (7) for the bidirectional transport of media (M), whereby the safety valve (1) can be used equally well for flows whose directions change in the pipe system, said safety valve (1) comprising a continuous cavity (2) with at least two openings (21, 22) for connection to the pipe system (7), whereby, in the cavity (2), a sealing element (3) having suitable dimensions (A1, A2, D) is held reversibly in a holder (4) in a resting position (RP), and the holder (4) and the cavity (2) are designed in such a way that the holder (4) exerts a holding force (HK) on the sealing element (3) so that, under normal conditions (NB), the sealing element (3) remains in the resting position (RP) in the holder (4), irrespective of the installation direction of the safety valve, and the holding force (HK) exerted by the holder (4) on the sealing element (3) is adapted in such a way that the sealing element (3) can be removed (E) from the holder (4) by the flowing medium (M) in any possible flow direction when the flow speed (S) of the medium (M) is above a threshold value (SW), and the cavity (2) is designed in such a way that it tapers suitably towards the openings (21, 22) in at least one section (23) of the cavity (2), so that the sealing element (3) that has been removed (E) from the holder (4) due to the speed of the flow remains in a sealing position (DP) in the tapering section (23), as a result of which the cavity (2) is sealed towards this opening (21) vis-à-vis the medium (M),
**characterized in that**
the medium (M) flowing through the pipe system (7) under normal conditions (NB) can pass the safety valve (1) through the cavity (2), irrespective of the flow direction (S), and in this process, can flow around the holder, and **in that** the sealing element (3) is connected in a suitable manner to the holder (4) by means of a mechanical return element (6), and the mechanical return element (6) is provided so that the sealing element (3) - which had been removed from the holder (4) due to the flow speed of the medium (M) that was above the threshold value (SW) - is returned from the sealing position (DP) into the resting position (RP) in the holder (4) once the flow speed of the medium (M) has reverted to the normal conditions (NB).

2. The safety valve (1) according to claim 1,
**characterized in that**
the tapering section (23) is shaped conically with a largest diameter (GD) and a smallest diameter (KD), whereby the smallest diameter (KD) of the conical section is smaller than a first dimension (A1) of the sealing element (3), and the largest diameter (GD) is larger than a second dimension (A2) of the sealing element (3), which has a circular cross section at least in one area.

3. The safety valve (1) according to claim 1 or 2,
**characterized in that**
the sealing position (DP) of a sphere (31) as the sealing element (3) is at a distance from the resting position of the sphere (31) that is less than two times the sphere diameter (D), preferably less than 1.5 times the sphere diameter (D), even more preferably less than 1.0 time the sphere diameter (D).

4. The safety valve (1) according to one of the preceding claims,
**characterized in that**
the sealing element (3) consists of metallic material (32) or of ceramic material (32).

5. The safety valve (1) according to claim 4,
**characterized in that**
the sealing element (3) is enclosed in an elastic material (33).

6. The safety valve (1) according to one of claims 1 to 5,
**characterized in that**
the holder (4) is a mechanical fixation device (42), preferably a clamping device (42), whereby the clamping device (42), preferably situated between a frame (421) that is open at least in the direction of the openings, comprises several retaining bars (422) that are adapted to the shape of the sealing element (3) at least in one area, so that the holding force (HK) is exerted by the retaining bars (422) onto the sealing element (3) in the resting position (RP).

7. The safety valve (1) according to one of the preceding claims,
**characterized in that**
the mechanical return element (6) comprises a spring-mounted cable control (61) whose spring force (FK) is adapted in such a way that it is of sufficient magnitude to return (ZH) the sealing element (3) into the holder (4), if applicable, against a medium (M) that is flowing through the safety valve (1) under normal conditions (NB), and **in that** the spring force (FK) of the control cable (61) and the holding force (HK) of the holder (4) are adapted in such a way that the spring force (FK) and the holding force (HK) combined are insufficient to keep the sealing element (3) in the holder (4) when the flow speed of the medium (M) flowing through the safety valve (1) is above the threshold value (SW).

8. The safety valve (1) according to one of the preceding claims,
**characterized in that**
the cavity (2) surrounding the sealing element (3) and the holder (4) has an extension in at least two different spatial directions that is larger than the dimensions (A1, A2, D) of the sealing element (3) and of the holder (4), whereby the extension and the shape of the cavity (2) are selected in such a way that the medium (M) can flow through the cavity (2) without any additional flow resistance.

9. The safety valve (1) according to one of the preceding claims,
**characterized in that**
the tapering sections (23) of the cavity (2) and the resting position (RP) of the sealing element (3) are arranged in one plane, and the safety valve (1) is provided in a horizontal position for installation in a pipe system (7) in an orientation congruent with the plane.

10. A method for operating a safety valve (1) according to claim 1 for use in a pipe system (7) for the bidirectional transport of media (M), comprising the steps:
- at least one of the safety valves (1) is installed (EB) in the pipe system (7) by connecting the openings (21, 22) to the pipe system (7), so that the medium (M) can flow (S) through the safety valve (1), whereby the sealing element (3) is situated reversibly in the holder (4) in the resting position (RP),
- the pipe system (7) is operated (BT) under normal conditions (NB) so that the medium (M) can flow through the cavity (2) of the safety valve (1), and the holder (4) exerts a holding force (HK) on the sealing element (3) that, irrespective of the installation direction of the safety valve, is sufficient to hold the sealing element (3) in the resting position (DP) under normal conditions (NB),
- one of the openings (21, 22) is sealed (AD) by means of the sealing element (3) in a momentarily present flow direction at a flow speed of the medium (M) that is above a threshold value (SW), whereby the flow speed of the medium (M) above the threshold value (SW) is sufficient to remove the sealing element (3) from the holder (4), after which the sealing element (3) remains in a sealing position (DP) in the cavity (2) that tapers suitably towards the openings (21, 22) in at least one section (23), so that the cavity (2) is sealed towards this opening (21, 22) vis-à-vis the medium (M), and
- by means of a mechanical return element (6) that connects the sealing element (3) to the holder (4) in a suitable manner, the sealing element (3) is returned (ZH) from the sealing position (DP) into the resting position (RP) after the flow speed of the medium (M) has reverted to the normal conditions (NB),

11. The method according to claim 2,
**characterized in that**
the mechanical return element is a spring-mounted cable control (61) whose spring force (FK) is adapted in such a manner that it is sufficient to return the sealing element (3) into the holder (4), even against a medium (M) that is flowing through the safety valve (1) under normal conditions (NB), whereby the spring force (FK) of the control cable (61) and the holding force (HK) of the holder (4) are adapted in such a way that the spring force (FK) and the holding force (HK) combined are insufficient to keep the sealing element (3) in the holder (4) when a flow speed of the medium (M) is above the threshold value (SW).

## Revendications

1. Soupape de sécurité (1) destinée à être mise en oeuvre dans un système de tuyauterie (7) pour le transport bidirectionnel de fluides (M), la soupape de sécurité (1) pouvant être pareillement utilisée pour des directions d'écoulement changeantes dans le système de tuyauterie du fait qu'elle comprend une cavité traversante (2) présentant au moins deux ouvertures (21, 22) pour raccordement au système de tuyauterie (7), un corps d'étanchéité (3) présentant des dimensions (A1, A2, D) appropriées étant, dans la cavité (2), maintenu dans un dispositif de retenue (4) de manière réversible dans une position de repos (RP) et le dispositif de retenue (4) et la cavité (2) étant configurés de telle manière que le dispositif de retenue (4) exerce une force de retenue (HK) sur le corps d'étanchéité (3), de sorte que le corps d'étanchéité (3), dans des conditions normales (NB), reste dans la position de repos (RP) dans le dispositif de retenue (4) indépendamment du sens de montage de la soupape de sécurités et que la force de retenue (HK) du dispositif de retenue (4) sur le corps d'étanchéité (3) est adaptée manière telle que le corps d'étanchéité (3), à une vitesse d'écoulement (S) du fluide (M) supérieure à une valeur seuil (SW), peut être retiré (E) du dispositif de retenue (4) dans toute direction d'écoulement possible par le fluide en écoulement (M) et en ce que la cavité (2) s'amincit, au moins dans une partie (23) de la cavité (2), de manière appropriée en direction des ouvertures (21, 22) respectives, de sorte que le corps d'étanchéité (3) retiré (E) du dispositif de retenue (4) reste, en raison de la vitesse d'écoulement, dans une position d'étanchéité (DP) dans la partie (23) qui va s'amincissant, de sorte que la cavité (2) est rendue étanche au fluide (M) en direction de cette ouverture (21),
**caractérisée en ce que**
le fluide (M) qui traverse le système de tuyauterie (7) dans des conditions normales (NB) peut passer par la soupape de sécurité (1) la cavité (2) indépendamment de la direction d'écoulement (S) tout en contournant le dispositif de retenue et **en ce que** le corps d'étanchéité (3) est relié au dispositif de retenue (4) de manière appropriée par l'intermédiaire d'un moyen de rappel mécanique (6) et **en ce que** le moyen de rappel mécanique (6) est prévu pour ramener de la position d'étanchéité (DP) à la position de repos (RP) dans le dispositif de retenue (4) le corps d'étanchéité (3) retiré du dispositif de retenue (4) en raison d'une vitesse d'écoulement du fluide (M) supérieure à la valeur seuil (SW) après que la vitesse d'écoulement du fluide (M) est revenue dans des conditions normales (NB).

2. Soupape de sécurité (1) selon la revendication 1,
**caractérisée en ce que**
la partie (23) qui va s'amincissant a une forme conique présentant un diamètre maximal (GD) et un diamètre minimal (KD), le diamètre minimal (KD) de la partie conique étant inférieur à une première dimension (A1) du corps d'étanchéité (2) et le diamètre maximal (GD) étant supérieur à une deuxième dimension (A2) du corps d'étanchéité (3) qui présente une section circulaire au moins dans une zone.

3. Soupape de sécurité (1) selon la revendication 1 ou 2,
**caractérisée en ce que**
la position d'étanchéité (DP) d'une sphère (31) servant de corps d'étanchéité (3) est distante de la position de repos de la sphère (31) de moins de deux diamètres de sphère (D), de préférence de moins de 1,5 diamètre de sphère (D), et de manière encore plus préférentielle de moins de 1,0 diamètre de sphère (D).

4. Soupape de sécurité (1) selon l'une des revendications précédentes,
**caractérisée en ce que**
le corps d'étanchéité (3) comprend une matière métallique (32) ou une matière céramique (32).

5. Soupape de sécurité (1) selon la revendication 4,
**caractérisée en ce que**
le corps d'étanchéité (3) est entouré d'une matière élastique (33).

6. Soupape de sécurité (1) selon l'une des revendications 1 à 5,
**caractérisée en ce que**
le dispositif de retenue (4) est un dispositif de fixation mécanique (42), de préférence un dispositif de serrage (42), le dispositif de serrage (42) comprenant, de préférence dans un cadre (421) ouvert au moins en direction des ouvertures, plusieurs nervures de retenue (422) adaptées, au moins dans une zone, à une forme du corps d'étanchéité (3), de sorte que la force de retenue (HK) est exercée par les nervures de retenue (422) sur le corps d'étanchéité (3) dans la position de repos (RP).

7. Soupape de sécurité (1) selon l'une des revendications précédentes,
**caractérisée en ce que**
le moyen de rappel mécanique (6) comprend une commande par câble (61) logée élastiquement et dont la force élastique (FK) est adaptée de manière telle que la force élastique (FK) suffit pour rappeler (ZH) dans le dispositif de retenue (4) le corps d'étanchéité (3) le cas échéant à l'encontre d'un fluide (M) qui traverse la soupape de sécurité (1) dans des conditions normales (NB) et **en ce que** la force élastique (FK) de la commande par câble (61) et la force de retenue (HK) du dispositif de retenue (4) sont adaptées de telle sorte que la force élastique (FK) et la force de retenue (HK) sont ensemble trop faibles pour maintenir le corps d'étanchéité (3) dans le dispositif de retenue (4) à une vitesse d'écoulement du fluide (M) traversant la soupape de sécurité (1) supérieure à la valeur seuil (SW).

8. Soupape de sécurité (1) selon l'une des revendications précédentes,
**caractérisée en ce que**
la cavité (2) entourant le corps d'étanchéité (3) et le dispositif de retenue (4) possède une extension dans deux directions spatiales différentes qui est supérieure aux dimensions (A1, A2, D) du corps d'étanchéité (3) et du dispositif de retenue (4), l'extension et la forme de la cavité (2) étant choisies de manière telle que le fluide (M) peut traverser la cavité (2) sans plus de résistance à l'écoulement.

9. Soupape de sécurité (1) selon l'une des revendications précédentes,
**caractérisée en ce que** la partie qui va s'amincisssant (23) de la cavité (2) et la position de repos (RP) du corps d'étanchéité (3) sont situées dans un plan et **en ce que** la soupape de sécurité (1) est prévue pour être montée dans un système de tuyauterie (7) dans une orientation plan en position horizontale.

10. Procédé pour faire fonctionner une soupape de sécurité (1) selon la revendication 1 pour utilisation dans un système de tuyauterie (7) pour le transport bidirectionnel de fluides (M), comportant les étapes suivantes :
- monter (EB) au moins l'une des soupapes de sécurité (1) dans le système de tuyauterie (7) en reliant les ouvertures (21,22) au système de tuyauterie (7), de sorte que le fluide (M) peut traverser (S) la soupape de sécurité (1), le corps d'étanchéité (3) se trouvant de manière réversible dans la position de repos (RP) dans le dispositif de retenue (4) ;
- faire fonctionner (BT) le système de tuyauterie (7) dans des conditions normales (NB), de sorte que le fluide (M) peut traverser la cavité (2) de la soupape de sécurité (1) et que le dispositif de retenue (4), dans la position de repos (RP), exerce sur le corps d'étanchéité (3), indépendamment du sens du montage de la soupape de sécurité, une force de retenue (HK) qui suffit pour maintenir le corps d'étanchéité (3) dans la position de repos (RP) dans des conditions normales (NB);
- rendre étanche (AD) l'une des ouvertures (21,22) par le corps d'étanchéité (3) dans une direction d'écoulement actuelle à une vitesse d'écoulement du fluide (M) supérieure à une valeur seuil (SW) par le fait que la vitesse d'écoulement du fluide (M) supérieure à la valeur seuil (SW) suffit pour retirer le corps d'étanchéité (3) du dispositif de retenue (4), suite à quoi le corps d'étanchéité (3) reste dans une position d'étanchéité (DP) dans la cavité (2) qui s'amincit, au moins dans une partie (23), de manière appropriée en direction des ouvertures respectives (21,22), de sorte que la cavité (2) est, en direction de cette ouverture (21, 22), rendue étanche au fluide (M), et
- ramener (ZH) le corps d'étanchéité (3) de la position d'étanchéité (DP) dans la position de repos (RP), après que la vitesse d'écoulement du fluide (M) est revenue dans des conditions normales (NB), au moyen d'un moyen de rappel mécanique (6) qui relie de manière appropriée le corps d'étanchéité (3) au dispositif de retenue (4).

11. Procédé selon la revendication 10,
**caractérisé en ce que**
le moyen de rappel mécanique est une commande par câble (61) logée élastiquement et dont la force élastique (FK) est adaptée de manière telle que la force élastique (FK) suffit pour rappeler dans le dispositif de retenue (4) le corps d'étanchéité (3) même à l'encontre d'un fluide (M) qui traverse la soupape de sécurité (1) dans des conditions normales (NB), la force élastique (FK) de la commande par câble (61) et la force de retenue (HK) du dispositif de retenue (4) étant adaptées de telle sorte que la force élastique (FK) et la force de retenue (HK) sont ensemble trop faibles pour maintenir le corps d'étanchéité (3) dans le dispositif de retenue (4) à une vitesse d'écoulement du fluide (M) supérieure à la valeur seuil (SW).
